# EUROPÄISCHE PATENTSCHRIFT

(11) **EP 0 715 397 B1**
(45) Veröffentlichungstag und Bekanntmachung des Hinweises auf die Patenterteilung: **19.07.2000**
(21) Anmeldenummer: 95118683.2
(22) Anmeldetag: 28.11.1995
(51) Int. Cl.: H02K 57/00, H02K 16/02, H02K 19/10, H02K 21/38

(54) **Geschalteter Reluktanzmotor Switched Reluctance Motor**
Switched reluctance motor
Moteur à réluctance commuté

(30) Priorität: 02.12.1994 DE 4442992
(43) Veröffentlichungstag der Anmeldung: 05.06.1996
(73) Patentinhaber: Parras, Karl-Heinz, 91126 Schwabach (DE)
(72) Erfinder: Parras, Karl-Heinz, 91126 Schwabach (DE)

(56) Entgegenhaltungen:
- FR-A- 2 315 793
- US-A- 2 643 274
- US-A- 4 882 509
- US-A- 5 117 144
- PATENT ABSTRACTS OF JAPAN vol. 010, no. 319 (E-450) 30. Oktober 1986 & JP-A-61 128 761 (ISHIKAWAJIMA HARIMA HEAVY IND CO LTD) 16. Juni 1986

## Beschreibung

Die Erfindung betrifft einen geschalteten Reluktanzmotor.

Unter einem geschalteten Reluktanzmotor (engl: Switched Reluctance Motor, SR) versteht man ein Antriebsprinzip, bei dem die Anziehungskraft eines Magneten gegen Eisen zur Drehmomenterzeugung verwendet wird. Anders ausgedrückt: Es handelt sich um eine Anordnung, bei der das System bestrebt ist, den magnetischen Kreis in den Zustand des geringsten magnetischen Widerstandes (Reluktanz) zu bringen.

Eine übliche Anordnung, die weiter unten ausführlicher beschrieben wird, besteht z.B. aus einem weichmagnetischen Rotor mit einer bestimmten Anzahl von Polen und einem Stator mit mindestens ebensovielen Polen. Die Statorpole besitzen jeweils eine Erregerspule, die Spulen der gegenüberliegenden Pole werden elektrisch zusammengeschaltet und bilden das Nord-/Südpolpaar für eine Bewegungsphase.

Durch geeignete elektronische Schalter werden die Polpaare in richtiger Reihenfolge und abgestimmter Zeitdauer mit Strom beaufschlagt und magnetisch erregt. Durch fortlaufendes, winkelrichtiges Weiterschalten der Phasenströme wird das gewünschte Drehmoment erreicht.

Aus PATENT ABSTRACTS OF JAPAN vol. 010, no, 319 (E-450) 30. Oktober 1986 & JP-A-61 128 761 (ISHIKAWAJIMA HARIMA HEAVY IND CO LTD) 16. Juni 1986 ist ein geschalteter Reluktanzmotor mit einem Permanentmagneten und einem Elektromagneten bekannt. In vorbestimmten Zeitintervallen wird das Magnetfeld des Permanentmagneten durch ein vom Elektromagneten erzeugtes Gegenmagnetfeld kompensiert.

In US-A-4 882 509 ist ein geschalteter Reluktanzmotor mit einem Stator, der vorzugsweise aus Elektromagneten aufgebaut ist, und einem Rotor beschrieben, der vorzugsweise aus Permanentmagneten aufgebaut ist. Zur Erzeugung eines Drehmomentes werden die Elektromagnete während vorbestimmter Zeitintervalle bestromt. Zwischen dem Rotor und dem Stator rotiert ein Schild, der aus supraleitendem Material hergestellt ist und einen Bogen von etwas mehr als 90° bildet, mit der gleichen Geschwindigkeit jedoch in entgegengesetzter Richtung wie der Rotor. Der rotierende Schild dient dazu, die magnetische Kopplung zwischen dem Stator und dem Rotor zu unterbrechen.

Aus US-A-5 117 144 ist ein geschalteter Reluktanzmotor bekannt, der aus einem Stator, aus dem Magnetpolpaare - ein ferromagnetischer und ein permanentmagnetischer Pol - angeordnet sind, sowie aus einem Rotor aufgebaut ist. An jedem Pol des Rotors ist eine Nase vorgesehen. Infolge dieser Nasen an den Polen des Rotors ist es möglich, den Reluktanzmotor mittels nur eines einzigen elektronischen Schalters, beispielsweise eines Schalttransistors, zu steuern.

Der Erfindung liegt die Aufgabe zugrunde, eine Variante eines geschalteten Reluktanzmotors mit besserem Wirkungsgrad anzugeben.

Ein solcher Reluktanzmotor ist gekennzeichnet
- durch Permanentmagnete zur Erzeugung von Drehmomenten,
- durch schaltbare elektromagnetische Spulen, die dafür vorgesehen sind, das Magnetfeld mindestens eines Permanentmagneten in vorbestimmten Zeitintervallen zu kompensieren,
- sowie durch konstruktive Mittel, die den Reluktanzverlauf als Funktion des Rotorwinkels unsymmetrisch gestalten.

Bei einer Erregung durch Permanentmagnete wird erfindungsgemäß ein positives mittleres Drehmoment dadurch erhalten, daß die Wirkung der Permanentmagnete ausgeschaltet oder zumindest ausreichend stark reduziert wird, wenn sich der Rotorpol vom Statorpol entfernt.

Dies ist bei heutigen modernen Magnetwerkstoffen (Neodymium-Eisen-Bor- bzw. Samarium-Cobalt-Legierungen) durch eine gleich starke Gegenerregung über eine elektromagnetische Spule während der entsprechenden Bewegungsphase erreichbar. Der resultierende magnetische Fluß kann auf diese Weise praktisch zu Null gemacht werden, eine irreversible Entmagnetisierung erfolgt bei den genannten Magnetwerkstoffen nicht.

Da die aufzuwendende Leistung für die Gegenerregung zur Bestromungsdauer proportional ist, sind zur Verkürzung dieser Dauer und damit zur Erhöhung des Wirkungsgrades Mittel vorgesehen, die Reluktanz zwischen Rotor- und Statorpolen des Motors in vorbestimmten Zeitintervallen möglichst groß zu machen.

Eine Erhöhung der Reluktanz in vorbestimmten Zeitintervallen zwischen Rotor- und Statorpolen des Motors bedeutet eine Verminderung der Kräfte zwischen diesen Polen in den vorbestimmten Zeitintervallen. Werden die Zeitintervalle großer Reluktanz ebenfalls in die Phase gelegt, in der ein Rotorpol sich vom Statorpol entfernt, so kann die Kompensation des Magnetfeldes während der Zeitintervalle großer Reluktanz gegebenenfalls ganz unterbleiben, d.h. die Zeitintervalle, in denen das Magnetfeld kompensiert wird, können verkürzt werden.

Anhand der Figuren und anhand von Ausführungsbeispielen soll die Erfindung nun näher erläutert werden.

Die Figuren haben folgende Bedeutung:

Fig. 1 zeigt die Darstellung eines üblichen geschalteten Reluktanzmotors mit 8 Stator- und 6 Läuferpolen.

Fig. 2 kennzeichnet den prinzipiellen zeitlichen Verlauf der sich gegenüberstehenden wirksamen Polflächen bei konventionellen Motoren.

Fig. 3 stellt den unsymmetrischen zeitlichen Verlauf der sich gegenüberstehenden wirksamen Polflächen für die vorliegende Erfindung dar.

Fig. 4 veranschaulicht für das Ausführungsbeispiel 1 die Steuerung des magnetischen Flusses zwischen den Statorpolen An, Bn durch die mit unterschiedlicher Geschwindigkeit umlaufenden Rotorpole Cn und D. Sie ist die abgewickelte Form der Fig. 5.

Fig. 5 zeigt ebenfalls für das Ausführungsbeispiel 1 die Steuerung des magnetischen Flusses zwischen den Statorpolen An, Bn durch die mit unterschiedlicher Geschwindigkeit umlaufenden Rotorpole Cn und D. Sie ist die winkelrichtige Darstellung der Fig. 4.

Fig. 6 zeigt die prinzipielle Anordung von Dauermagnet und Spule sowie den gesamten magnetischen Kreis zwischen den Statorpolen An und Bn.

Fig. 7 zeigt für Ausführungsbeispiel 1 die Zusammenschaltung der Erregerspulen S1 bis S15 sowie die Anordnung der elektronischen Schalter T1 bis T15 zur phasenrichtigen Weiterschaltung der Gegenerregung.

Fig. 8 ist ein Phasendiagramm für Ausführungsbeispiel 1, aus dem die wirksamen Polflächenverläufe sowie die Schließzeiten der elektronischen Phasenschalter für die 15 Polpaare und Spulen ersichtlich werden.

Fig. 9 zeigt einen Schnitt des Ausführungsbeispiels 2 mit den umlaufenden 16 Magnetpolen und den feststehenden Spulen 1 und 2 sowie dem inneren Rotor mit den Polschuhen 4, 5, 6 und 7.

Fig. 10 ist ebenfalls eine Schnittzeichnung des Ausführungsbeispiels 2. Die Schnittebene ist gegenüber Fig. 7 um 90 Grad gedreht. Es wird die Lagerung der beiden Rotoren, die Spulenbefestigung sie die Getriebekopplung zwischen den beiden Rotoren schematisch dargestellt.

Fig. 11 ist die achsiale Ansicht des inneren Rotors im Ausführungsbeispiel 2. Die Rotorpole sind schraffiert gezeichnet.

Fig. 12 zeigt eine Schnittzeichnung für das Ausführungsbeispiel 3. Es sind insbesondere die weichmagnetischen Elemente zur Leitung des magnetischen Flusses in Rotor 1 und Rotor 2 dargestellt.

Fig. 13 ist das Phasendiagramm für Ausführungsbeispiel 3, aus dem die wirksamen Polflächenverläufe sowie die Schließzeiten der elektronischen Phasenschalter für die 15 Polpaare und Spulen ersichtlich werden.

### Funktions-Merkmale

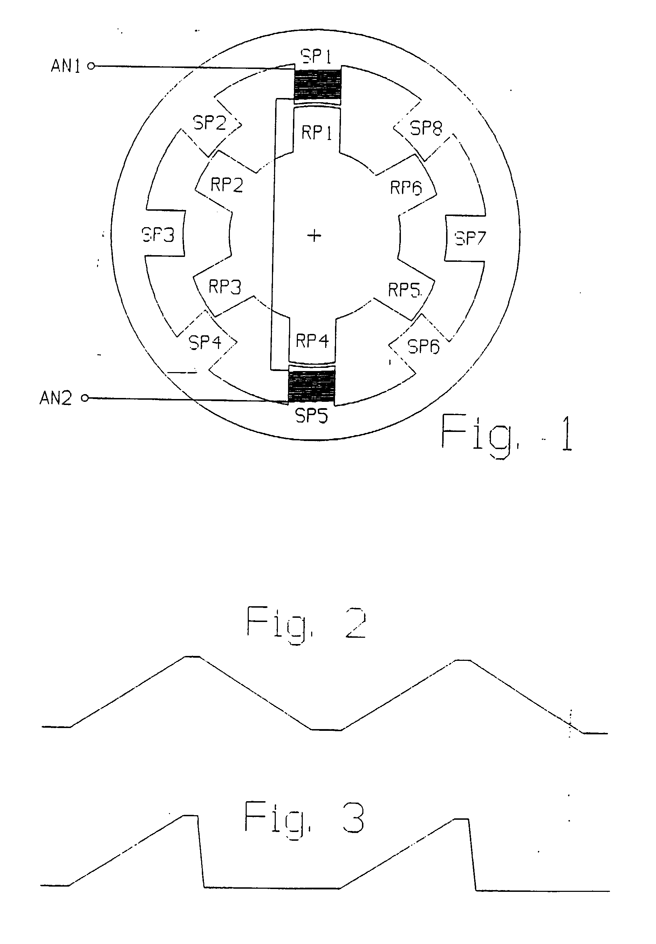

Die übliche Anordnung eines geschalteten Reluktanzmotors (siehe Fig.1) besteht z.B. aus einem weichmagnetischen Rotor mit 6 Polen (RP1...RP6) und einem Stator mit 8 Polen (SP1...SP8). Die Statorpole besitzen jeweils eine Erregerspule, die Spulen der gegenüberliegenden Pole werden elektrisch zusammengeschaltet und bilden das Nord-Südpolpaar für eine Phase. In Fig. 1 sind der Übersichtlichkeit wegen nur die Spulen von SP1 und SP5 angedeutet. Durch geeignete elektronische Schalter werden die Polpaare in richtiger Reihenfolge und abgestimmter Zeitdauer mit Strom beaufschlagt und magnetisch erregt. Durch fortlaufendes, winkelrichtiges Weiterschalten der Phasenströme wird das gewünschte Drehmoment erreicht.

Die vorliegende Erfindung beruht auf dem Ansatz, für die magnetische Erregung der Pole nicht Elektromagneten, sondern Permanentmagneten zu verwenden und durch weitere geeignete Mittel einen geschalteten Reluktanzmotor mit verbessertem Wirkungsgrad zu erhalten.

Üblicherweise verläuft bei Motoren die Zu- und Abnahme des magnetischen Flusses symmetrisch, wenn sich der Rotorpol am Statorpol mit konstanter Winkelgeschwindigkeit vorbeibewegt. Der wirksame magnetische Fluß ist dabei in erster Näherung proportional zu den sich gegenüberstehenden Flächenanteilen des Rotor- und des Statorspoles. Der typische zeitliche Verlauf dieser Flächenanteile für einen herkömmlichen Motor ist zur Veranschaulichung in Fig. 2 schematisch dargestellt.

Es ist unmittelbar ersichtlich, daß bei einer Erregung durch Permanentmagnete zusätzliche Maßnahmen notwendig sind, damit ein positives mittleres Drehmoment erhalten wird: Wenn sich der Rotorpol von dem Statorpol entfernt, muß die Wirkung des Permanentmagneten ausgeschaltet oder zumindest ausreichend stark reduziert werden. Dies ist bei heutigen modernen Magnetwerkstoffen (Neodymium-Eisen-Bor- bzw. Samarium-Cobalt-Legierungen) durch eine gleich starke Gegenerregung über eine Statorspule während der entsprechenden Bewegungsphase erreichbar. Der resultierende magnetische Fluß kann auf diese Weise vorübergehend praktisch auf Null gebracht werden, eine irreversible Entmagnetisierung erfolgt bei den o.a. Magnetwerkstoffen nicht.

Der herkömmliche Reluktanzmotor wird mit Strom beaufschlagt, während sich die Rotor- und Statorpole aufeinander zu bewegen. Beim hier dargestellten geschalteten Reluktanzmotor mit Erregung durch Permanentmagneten müssen die Erregerspulen mit Strom beaufschlagt werden, während sich die Pole voneinander entfernen, damit das resultierende Feld in dieser Bewegungsphase zu Null wird. Dabei ist die aufzuwendende Leistung für die Gegenerregung der Bestromungsdauer proportional.

In vorliegender Erfindung wird durch geeignete Maßnahmen erreicht, daß die den magnetischen Fluß bestimmenden Rotor- bzw. Stator-Flächenanteile unsymmetrisch zu- bzw. abnehmen: Der Anstieg des magnetischen Flusses erfolgt in der üblichen Zeit (während der Rotorpol zum Stator-Polschuh wandert), das Verkleinern der wirksamen Polflächen (während der Rotorpol sich vom Stator-Polschuh entfernt) erfolgt jedoch durch geeignete Maßnahmen in sehr viel kürzerer Zeit.

Dieser Zusammenhang ist in Fig. 3 schematisch dargestellt. Nach den o.a. Ausführungen reduziert sich damit die aufzubringende Leistung für die Gegenerregung umso mehr, je günstiger das Verhältnis dieser beiden Zeiten wird.

Theoretisch ließe sich dies durch Variation der Rotor-Winkelgeschwindigkeit in den jeweiligen Bewegungsphasen erreichen. Praktisch scheidet ein solcher Weg natürlich aus, weil solche abrupten Änderungen aufgrund des mechanischen Rotor-Trägheitsmoments nicht möglich und im Sinne einer möglichst guten Laufruhe auch nicht erstrebenswert sind.

Ein weiterer prinzipiell möglicher Lösungsansatz besteht darin, jeden einzelnen Stator- oder Rotorpol mit geeigneten Vorrichtungen zu versehen, die im Augenblick der Gegenerregung den magnetischen Widerstand in sehr kurzer Zeit möglichst groß werden lassen. Dies führt jedoch zu erheblichem konstruktiven Aufwand und zu zusätzlichem Energieverbrauch zur Steuerung dieser Mittel.

Nachfolgend werden 3 unterschiedliche Realisierungs-Varianten für die angesprochene Aufgabe beschrieben. Es geht dabei nur um die prinzipiellen Lösungsansätze. Modifikationen dieser Varianten wie Änderung der Polzahlen oder der mechanischen Konstruktionsmerkmale zur Fertigungsoptimierung sind natürlich möglich und ggfs. sinnvoll. Die üblichen Konstruktionsregeln und Materialanforderungen zur Erreichung geringer Wirbelstromverluste, Vermeidung der magnetischen Sättigung, Minimierung der Luftspalte usw. sollen an dieser Stelle nicht angesprochen werden.

### Ausführungs-Beispiel 1:

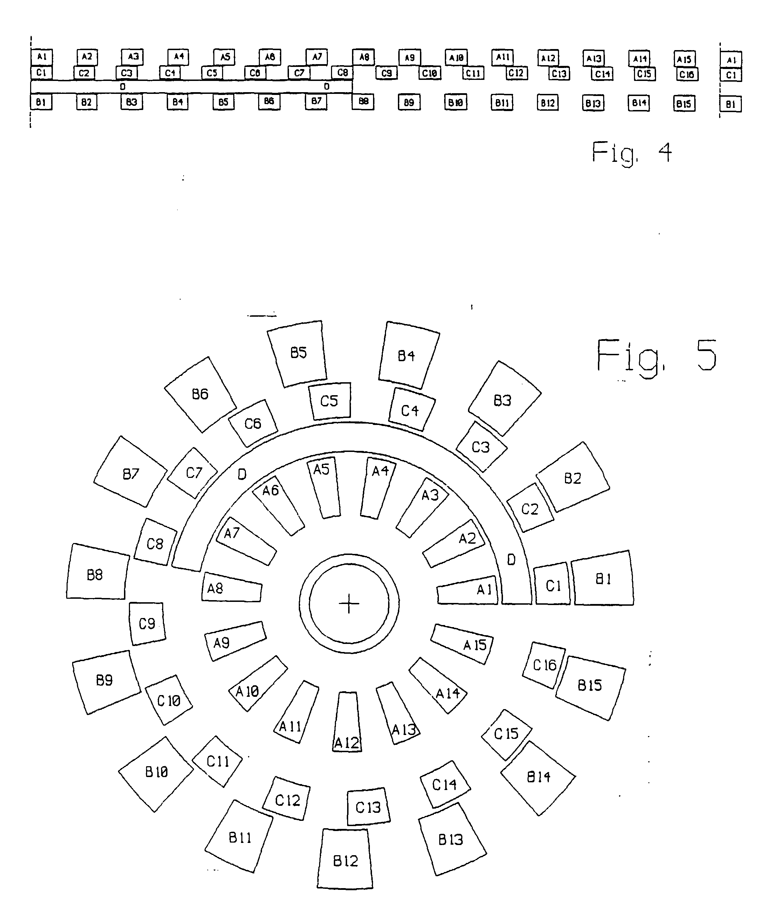

Das Ausführungs-Beispiel 1 sei anhand der Figuren 4 bis 6 näher erläutert. Fig. 4 und Fig. 5 sind inhaltlich identisch. Fig. 4 ist die lineare Darstellung der Fig. 5. A1 bis A15 und B1 bis B15 stellen jeweils Stator-Polpaare dar, die mit einem Winkelabstand von 24 Grad gleichmäßig über den Statorumfang verteilt sind. Sie befinden sich konstruktiv vorzugsweise auf zwei unterschiedlichen räumlichen Ebenen.

Das Drehmoment kann am Rotor 1 entnommen werden.

C1 bis C16 sind die weichmagnetischen Rotorpole des ersten Rotors, die mit einem Winkelabstand von 22,5 Grad gleichmäßig über den gesamten Rotorumfang verteilt sind. Der zweite Rotor D besitzt einen magnetisch leitenden Bereich über einen Winkel von 168 Grad (7x24). Die Breite der Pole selbst beträgt bei diesem Beispiel 11 Grad. Andere Polzahl-Kombinationen sind natürlich ebenfalls möglich, wenn die Winkel-Verhältnisse aufeinander abgestimmt werden.

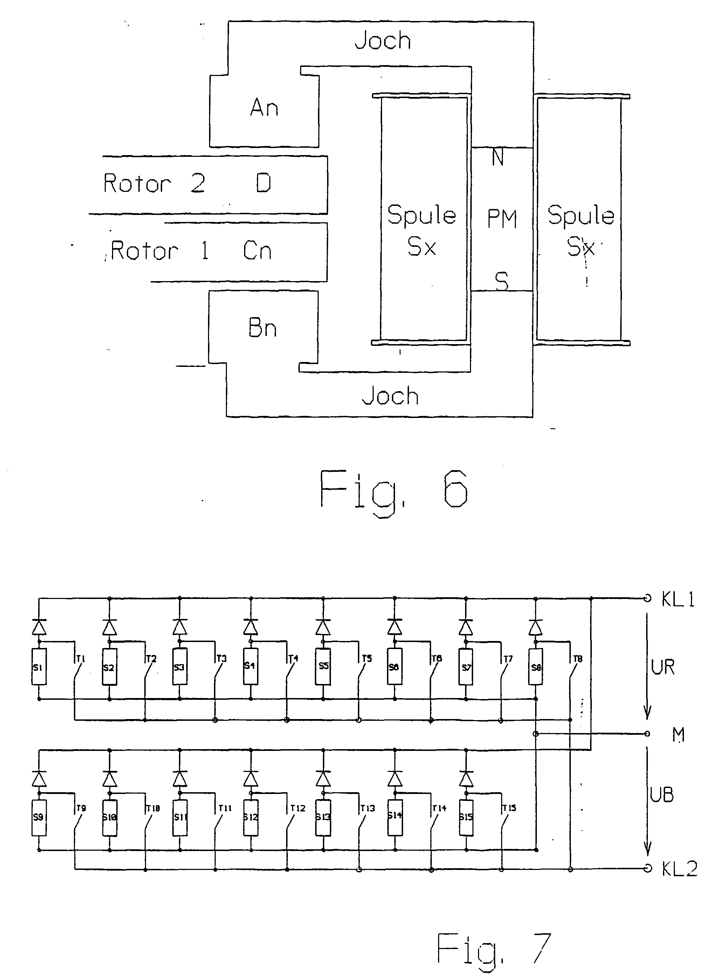

In den Figuren 4 und 5 sind aus Gründen der Übersichtlichkeit die zugehörigen Permanentmagnete, die Spulen für die Gegenerregung sowie die Spulen-Joche nicht eingezeichnet. Aus der Prinzip-Skizze Fig. 6 ist zu ersehen, wie der magnetische Kreis zwischen den Statorpolen An/Bn über ein magnetisch leitendes Joch und den Permanentmagneten PM geschlossen wird. Die Spule für die Gegenerregung kann den Permanentmagneten umschließen. Auf die genaue Dimensionierung oder die Auswahl geeigneter Materialien muß an dieser Stelle nicht eingegangen werden. Konstruktive Varianten sind möglich.

Um den o.a. unsymmetrischen Reluktanzverlauf zu erhalten, dreht sich der zweite Rotor phasenstarr in gleicher Richtung genau mit der 16-fachen Geschwindigkeit von Rotor 1 (im dargestellten Beispiel gegen den Uhrzeigersinn). Dies läßt sich mit geringem Aufwand z.B. durch eine entsprechende Zahnrad-Kupplung erreichen.

Der wirksame Polflächenverlauf an den Polen An/Bn entspricht auf diese Weise qualitativ dem in Bild 3 dargestellten Verlauf. In der gezeichneten Rotorposition der Figur 5 muß die A1/B1 zugeordnete Erreger-Spule kurzzeitig mit Strom beaufschlagt werden, damit der Pol C1 des Rotors 1 und das Rotorsegment D des Rotors 2 sich vom Stator-Polpaar A1/B1 lösen können. Die notwendige Bestromungsdauer wird bestimmt durch die Zeit, während der sich das Rotorsegment D im Anziehungsbereich des Statorpols A1 und des Rotorpols C1 befindet. Das Zeitverhältnis zwischen Stromfluß und stromlosem Zustand der Erreger-Spulen ist im vorliegenden Beispiel besser als 1:21 (16,75 Grad/360 Grad).

Entsprechend dem Reluktanz-Prinzip (Minimierung des resultierenden magnetischen Widerstandes) wird in der gezeigten Winkelstellung der Figur 5 durch die Rotorpole C2...C8 ein positives Drehmoment erzielt. Das durch die Rotorpole C10...C16 erzeugte Gegendrehmoment ist wegen des sehr großen Luftspaltes dieser Rotorpole gegen die Statorpole B9...B15 sehr viel kleiner. Von besonderem Vorteil ist es, daß in den Erregerspulen, die jeweils über das Rotorsegment D und die Rotorpole Cn einen starken Anstieg des magnetischen Flusses erfahren (in der gezeichneten Rotorposition sind das die den Statorpolen A2...A8 zugeordneten Spulen) eine elektrische Spannung induziert wird.

Es kann also aus diesen Spulen ggfs. ein Teil der elektrischen Leistung zurückgewonnen werden, die zur Gegenerregung des permanentmagnetischen Feldes aufgebracht werden muß. Das resultierende mechanische Drehmoment reduziert sich in diesem Fall um den entsprechenden Betrag.

In Fig. 8 ist der resultierende zeitliche Polflächenverlauf für das Ausführungs-Beispiel 1 sowie die Phasenbeziehung der Polpaare zueinander dargestellt.

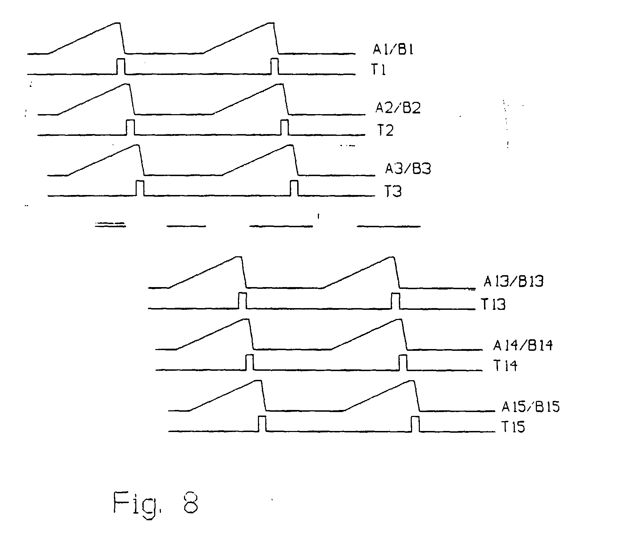

In Fig. 7 ist eine mögliche Zusammenschaltung der Erregerspulen S1 bis S15 sowie der Anschluß an das äußere Klemmenpaar KL1 und K12 dargestellt. Die Dioden entkoppeln das jeweilige Spulenpaar in der Phase der Gegenerregung (zugehörige Schalter geschlossen) von der jeweils gegenpoligen Anschlußklemme. Bei Öffnen der Schalter dienen sie gleichzeitig der Rückgewinnung der in den Spuleninduktivitäten gespeicherten Energie. Die Schalter T1 bis T15 werden bevorzugt als elektronische Schalter ausgeführt.

Die Einschalt-Zeitpunkte der Schalter sowie die Phasenlage zueinander gehen ebenfalls aus Fig. 7 hervor.

Weitere Schaltungseinheiten und Schaltungsanordnungen zur Positionsmessung und Drehzahlregelung werden hier nicht angesprochen, da sie mit konventionellen Lösungsansätzen zu erledigen sind.

### Ausführungs-Beispiel 2:

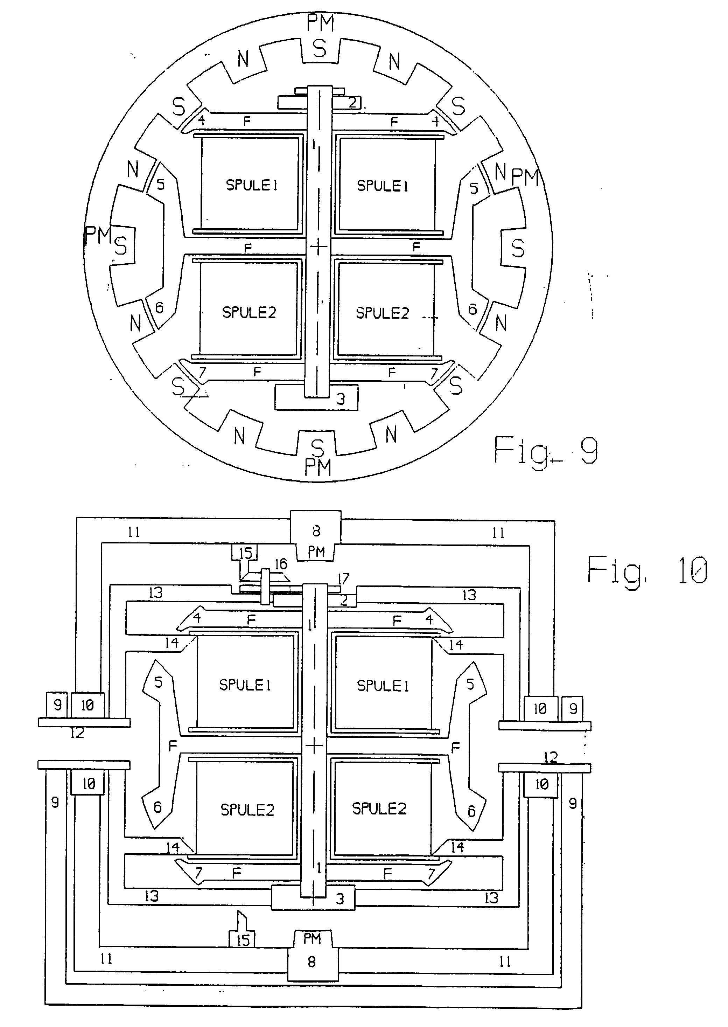

In den Fig. 9 bis 11 wird das Ausführungs-Beispiel 2 dargestellt:
Um eine stationäre Spule, die lediglich aus konstruktiven Gründen in zwei Hälften aufgeteilt wird, kreisen mit unterschiedlichen Geschwindigkeiten 2 Rotoren, deren Rotationsachsen um 90 Grad gegeneinander versetzt sind.

In Fig. 9 befindet sich die Achse des Rotors 1 senkrecht zur Zeichenebene. Der erste Rotor besteht aus hochpermeablem Material und weist 16 magnetische Pole (Neodymium-Eisen-Bor- bzw. Samarium-Cobalt-Legierung oder gleichwertig) auf, Nord- und Südpole in alternierender Reihenfolge.

Der zweite Rotor (F) ist innerhalb des ersten in den Lagern (2) und (3) um die Achse (1) drehbar gelagert. Diese Rotorachse und die anderen Bestandteile des inneren Rotors sind aus weichmagnetischem Material mit möglichst geringen Wirbelstromverlusten zu fertigen.

Der innere Rotor (F) besitzt Polschuh-Paare 4 bis 7, deren Flächen idealerweise wie auch die Polflächen des ersten Rotors in Form konzentrischer Kugelschalen-Abschnitte ausgebildet sind, damit die resultierenden Luftspalte zwischen den Polschuhen minimal werden.

Fig. 11 zeigt die Draufsicht auf diesen inneren Rotor (F). Die Polschuhe sind schraffiert gezeichnet. Bei der gewählten Polzahl und quadratischen Flächen der Magnetpole überstreichen die Pole des inneren Rotors einen Winkelbereich von 84,25 Grad. Der magnetische Flußverlauf ist anhand der Fig. 9 in der gezeichneten Winkelposition leicht darzustellen: Der Südpol (S) des ersten Rotors, Polschuh (4), Rotorachse (1), Polschuh (5) und Nordpol (N) des ersten Rotors schließen den magnetischen Kreis.

Für die untere Spulenhälfte und die Polpaare (6) bzw. (7) gilt Sinngemäßes.

Da der Fluß in den beiden Spulenhälften gegensinnig verläuft, muß dies beim elektrischen Anschluß der Spulen berücksichtigt werden, damit die Gegenerregung vorzeichenrichtig wirken kann.

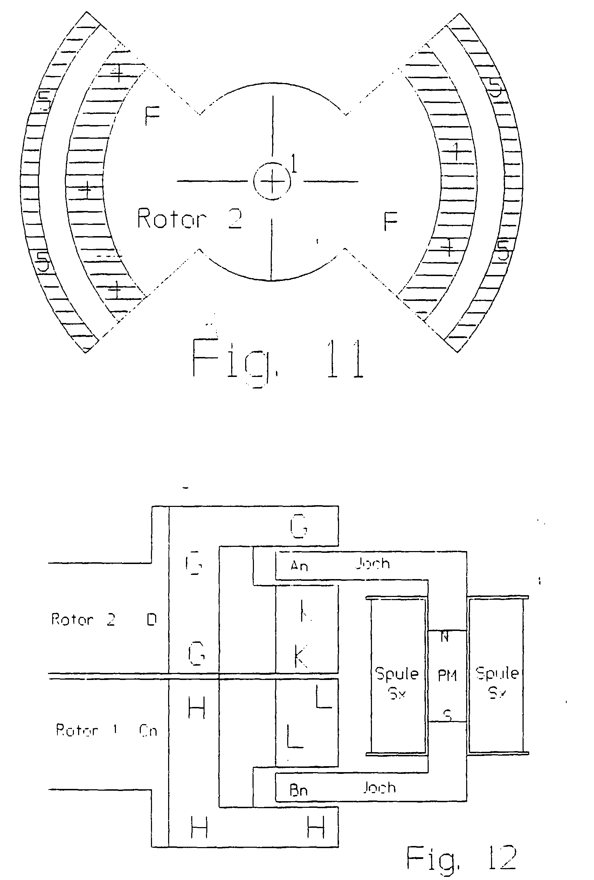

Die Spulenköper für Spule 1 und Spule 2 haben keinen mechanischen Kontakt zum zweiten Rotor (F). Sie können durch geeignete Befestigungen (Siehe Fig. 10) in ihrer Sollposition gehalten werden, eine Kontaktierung über verschleißanfällige Schleifringe erübrigt sich damit.

Fig. 10 zeigt einen weiteren Schnitt des Ausführungsbeispiels 2, an dem die mechanischen Konstruktionsmerkmale ersichtlich werden. Hier liegen jetzt die Achsen beider Rotoren innerhalb der Zeichenebene.

Fest verbunden mit dem Stativ (9) (oder ggfs. einem äußeren Gehäuse) sind die kurzen Hohlwellen (12), durch die die Stromzuführung zu den beiden Spulenteilen erfolgen kann. Eine geeignete Trägerkonstruktion (13) zur Aufnahme der Lager (2) und (3) für den zweiten Rotor ist auf den inneren Seiten fest mit den beiden Hohlwellen verbunden.

Die beiden Spulen sind über die Haltevorrichtung (14) fest mit dem Trägerrahmen (13) verbunden und werden dadurch in ihrer Sollposition gehalten.

Die Trägerkonstruktion (11) für den äußeren Rotor (8) ist mittels der Lager (10) drehbar um die beiden Hohlwellen (12) gelagert. Das Drehmoment kann über einen hier nicht eingezeichneten Zahnkranz vom äußeren Rotor abgenommen werden.

Für das Funktionieren der Anordnung ist Voraussetzung, daß sich die beiden Rotoren phasenstarr mit den richtigen Geschwindigkeiten bewegen. Bei den gewählten Polzahlen in diesem Ausführungsbeispiel 2 muß sich der innere Rotor mit der 8-fachen Winkelgeschwindigkeit des äußeren Rotors drehen.

Das läßt sich mit geringem Aufwand durch eine feste Zahnrad-Kopplung zwischen den beiden Rotoren erreichen. In Fig. 10 ist dies durch die Zahnräder (16) und (17) sowie den mit der Trägerkonstruktion (11) verbundenen Zahnkranz (15) angedeutet.

In der beschriebenen Anordnung ergibt sich ein zeitlicher Verlauf der wirksamen Polflächen ähnlich Fig. 3. Im Gegensatz zu Ausführungs-Beispiel 1 ist jedoch die Flußrichtung entsprechend der alternierenden Magnetpole des ersten Rotors ebenfalls alternierend. Aus diesem Grund muß die Gegenerregung vorzeichenrichtig ebenfalls mit alternierendem Vorzeichen erfolgen.

Vorteilhaft gegenüber dem Ausführungsbeispiel 1 ist, daß im magnetischen Kreis nur 2 statt 3 Luftwege zu überwinden sind, was bei vorgegebenen Magneten zu einer größeren erreichbaren Flußdichte führt.

### Ausführungs-Beispiel 3

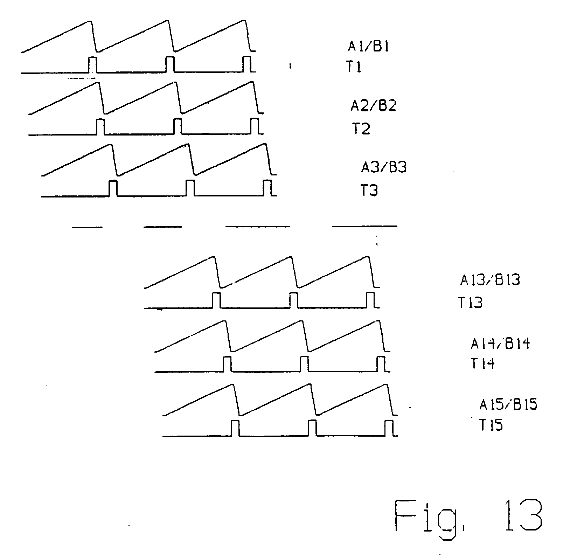

baut auf dem 1. Beispiel auf. Die ungünstigen Zeitbereiche ohne magnetische Flußänderung des Beispiels 1 werden durch eine zweite, winkelversetzte Rotoranordnung vermieden, die zu dem in Fig. 13 dargestellten Polflächen-Verlauf führt. Die Funktion der zusätzlichen winkelversetzten Rotoranordnung läßt sich mit geringem Aufwand ebenfalls mit nur zwei Rotoren erreichen, die über die zugeordneten Winkelbereiche mit geeigneten Fluß-Leitstücken versehen sind. Dies ist in Fig. 12 angedeutet: Die Leitstücke (K) und (L) realisieren genau die Rotorpole des ersten Ausführungsbeispiels. Die Leitstücke (G) und (H) realisieren den dazu um 180 Grad versetzten Polflächenverlauf. Da sich die magnetisch leitenden Bereiche des schnell laufenden 2. Rotors über nur 168 Grad erstrecken, kommt es nicht zu Überschneidungen zwischen den Flußwegen (G,H) und (K,L).

Das erreichbare mittlere Drehmoment kann also durch geringe zusätzliche konstruktive Maßnahmen wesentlich gesteigert werden.

## Patentansprüche

1. Geschalteter Reluktanzmotor mit Permanentmagneten (PM) zur Erzeugung von Drehmomenten und mit einer oder mehreren schaltbaren elektromagnetischen Spulen (S1, ..., Sx), die dafür vorgesehen sind, das Magnetfeld mindestens eines Permanentmagneten (PMx) in vorbestimmten Zeitintervallen zu kompensieren
gekennzeichnet durch :
konstruktive Mittel, die den Reluktanzverlauf als Funktion des Rotorwinkels unsymmetrisch gestalten.

2. Reluktanzmotor nach Anspruch 1,
dadurch gekennzeichnet,
daß die vorbestimmten Zeitintervalle in die Bewegungsphase eines sich anziehenden Polpaares des Motorsfallen, in der sich die beiden Pole voneinander entfernen.

3. Reluktanzmotor nach Anspruch 1,
gekennzeichnet durch
konstruktive Mittel, die dafür vorgesehen sind, die Reluktanz zwischen den Polpaaren des Motors in vorbestimmten Zeitintervallen möglichst groß zu machen.

4. Reluktanzmotor nach Anspruch 3,
dadurch gekennzeichnet,
daß die vorbestimmten Zeitintervalle für die Erhöhung der Reluktanz ebenfalls in die Bewegungsphase eines sich anziehenden Polpaares des Motors fallen, in der sich die beiden Pole voneinander entfernen.

5. Reluktanzmotor nach Anspruch 4,
gekennzeichnet durch
einen zusätzlichen Rotor (D) mit einer zum ersten Rotor identischen Drehachse, der den Reluktanzverlauf entsprechend den vorbestimmten Zeitintervallen steuert.

6. Reluktanzmotor nach Anspruch 4,
gekennzeichnet durch
einen ersten Rotor sowie einen zweiten Rotor (F), der innerhalb des ersten mit winkelversetzter Rotationsachse umläuft und den Reluktanzverlauf entsprechend den vorbestimmten Zeitintervallen steuert.

## Claims

1. Switched reluctance motor,
characterised by:
- permanent magnets (PM) for generation of a torque and
- one or more switchable electromagnetic coils (S1 ...Sx) which are intended to cancel out the magnetic field of at least one pair of permanent magnets (PMx) at pre-determined time intervals.

2. Reluctance motor as described in Claim 1,
characterised by the fact that:
the pre-determined time intervals fall in the movement phase of a pair of motor poles which attract each other in which the two poles are moving away from each other.

3. Reluctance motor as described in Claim 1,
characterised by:
design features which are intended to make the reluctance between the pole pairs of the motor as large as possible at pre-determined time intervals.

4. Reluctance motor as described in Claim 3,
characterised by the fact that:
the pre-determined time intervals for the increase of the reluctance also fall in the movement phase of a pair of motor poles which attract each other in which the two poles are moving away from each other.

5. Reluctance motor as described in Claim 4,
characterised by:
an additional rotor (D) on the same axis of rotation as the first rotor which controls the reluctance curve in accordance with the pre-determined time intervals.

6. Reluctance motor as described in Claim 4,
characterised by:
a first rotor and a second rotor (F) which rotates within the first rotor with an axis of rotation with an angular displacement and controls the reluctance curve in accordance with the pre-determined time intervals.

## Revendications

1. Moteur à reluctance commuté
caractérisé par :
- des aimants permanents (PM) pour la production du couple et
- une ou plusieurs bobines électromagnétiques commutables (S1..Sx) destinées à compenser à intervalles de temps prédéfinis le champ magnétique d'au moins un aimant permanent (PMx).

2. Moteur à reluctance selon la revendication 1,
caractérisé par :
le fait que les intervalles de temps prédéfinis tombent dans la phase de mouvement d'une paire de pôles du moteur s'attirant mutuellement où les deux pôles s'éloignent l'un de l'autre.

3. Moteur à reluctance selon la revendication 1,
caractérisé par :
des moyens de construction ayant pour objet de maximiser à intervalles de temps prédéfinis la reluctance entre les paires de pôles du moteur.

4. Moteur à reluctance selon la revendication 3,
caractérisé par :
par le fait que les intervalles de temps prédéfinis pour l'accroissement de la reluctance tombent également dans la phase de mouvement d'une paire de pôles du moteur s'attirant mutuellement où les deux pôles s'éloignent l'un de l'autre.

5. Moteur à reluctance selon la revendication 4,
caractérisé par :
un rotor supplémentaire (D) ayant un axe de rotation identique à celui du premier rotor et qui a pour objet de faire varier la reluctance en fonction des intervalles de temps prédéfinis.

6. Moteur à reluctance selon la revendication 4,
caractérisé par :
un premier rotor et un deuxième rotor (F) qui tourne à l'intérieur du premier autour d'un axe de rotation désaxé angulairement et qui fait varier la reluctance en fonction des intervalles de temps prédéfinis.
